# DEMANDE DE BREVET EUROPEEN

(11) **EP 0 828 100 A1**
(43) Date de publication de la demande: **11.03.1998**
(21) Numéro de dépôt: 97401931.7
(22) Date de dépôt: 13.08.1997
(51) Int. Cl.: F16K 27/06

(54) **Robinet à obturateur sphérique**

(30) Priorité: 06.09.1996 FR 9610910
(71) Demandeur: Gachot S.C.A., 95230 Soisy-sous-Montmorency (FR)
(72) Inventeur: Kirsher, André M., 67120 Dorlisheim (FR); Popa, Alexandre M., 95580 Margency (FR)
(74) Mandataire: Derambure, Christian

(57) **Abrégé**

Corps creux (7) destiné à être associé à un autre corps pour former un corps principal notamment d'un robinet à obturateur sphérique, comportant un canal (9a) de section transversale sensiblement circulaire, s'étendant suivant une direction principale (D_{P}) ; et un logement (11), de forme générale hémisphérique, ayant une ouverture du communication (12a) avec le canal (9a) centrés sur un même axe (D), et une ouverture de raccordement (16a) à l'autre corps, délimitée par une portée de raccordement (18a) et située en regard de l'ouverture du communication (12a) suivant la direction principale (Dₚ), l'ouverture de raccordement (16a) présentant un contour sensiblement circulaire de diamètre supérieur à celui de l'ouverture du communication (12a). L'axe géométrique (D') de la portée de raccordement (18a) est parallèle et décalé par rapport à l'axe géométrique (D) de l'ouverture du communication (12a).

## Description

L'invention concerne un corps creux destiné à être associé à un autre corps pour former un corps principal, notamment d'un robinet à obturateur sphérique.

Un tel corps creux est du type comportant un canal de section transversale sensiblement circulaire, s'étendant suivant une direction principale, et un logement, de forme générale hémisphérique.

Le logement comporte une ouverture de communication avec le canal, délimitée par un siège, l'ouverture de communication et le canal étant centrés sur un même axe.

Le logement comporte, en outre, une ouverture de raccordement à l'autre corps, délimitée par une portée de raccordement et située en regard de l'ouverture de communication suivant la direction principale, l'ouverture de raccordement présentant un contour sensiblement circulaire de diamètre supérieur à celui de l'ouverture de communication.

L'invention concerne également un robinet à obturateur sphérique comprenant un corps principal ayant deux corps creux du type précité.

Enfin, l'invention concerne un procédé de montage d'un tel robinet.

Un tel robinet est destiné à résister à tous les produits hautement corrosifs, liquides ou gaz pour lesquels il est indispensable d'assurer en cas de défaillance quelconque une parfaite étanchéité du robinet tant en position d'ouverture qu'en position de fermeture.

Dans la description et les revendications ci-après, le mot "robinet" doit être pris dans son sens le plus général et s'applique quelque soit le diamètre de la conduite.

Il englobe donc aussi les dispositifs fréquemment appelés vannes.

On connaît des robinets à obturateur sphérique comprenant deux corps creux du type précité, associés de manière rigide et étanche l'un à l'autre, avec leur canal et ouverture de communication respectifs en regard, de manière à former un logement principal de forme générale sphérique et délimité de part et d'autre par les sièges des corps creux.

Le logement principal comporte une ouverture dite supérieure, dont l'axe est sensiblement perpendiculaire à la direction principale, et débouchant sur un manchon.

Le robinet comprend, en outre, un organe d'obturation comportant une boule, adaptée à tourner autour d'un axe de rotation et percée sensiblement en son centre d'un alésage traversant, s'étendant sensiblement perpendiculairement à l'axe de rotation, et une tige associée, par une extrémité, à la boule et s'étendant dans le prolongement de l'axe de rotation de la boule.

La boule est placée dans le logement principal et la tige s'étend à travers l'ouverture supérieure dans le manchon.

Le montage d'un tel robinet est relativement simple lorsque la boule et la tige sont associées de manière amovible. On insère alors séparément la tige et la boule dans le corps principal puis on fixe la tige sur la boule.

Par contre, les difficultés commencent dès qu'il s'agit d'un organe d'obturation monobloc, où la boule et la tige sont rigidement solidaires. Un tel organe d'obturation présente l'avantage d'une très bonne tenue mécanique du revêtement et donc l'absence d'usure à la jonction boule-tige.

Certes, l'introduction d'un organe d'obturation monobloc dans un robinet comportant deux corps creux identiques, raccordés sensiblement au niveau de la partie centrale du logement principal, est relativement aisée. Mais, un tel robinet présente l'inconvénient selon lequel le dispositif de presse-étoupe, généralement formé par le manchon et destiné à entourer la tige, est coupé en deux également, ce qui réduit les qualités d'étanchéité.

Différentes solutions ont été envisagées jusqu'à l'heure actuelle, mais aucune ne semble entièrement satisfaisante, soit en raison du coût élevé de réalisation, du fait de l'introduction de pièces supplémentaires, soit en raison d'éléments à caractère technique, du fait d'une étanchéité insuffisante.

L'invention a donc pour but de pallier les inconvénients de l'art antérieur.

Elle a pour objet de proposer un robinet à obturateur sphérique monobloc, comportant deux corps creux, pour lequel non seulement les exigences techniques et de coûts moindres sont respectées mais également, le montage est facilité et ne nécessite pas l'intervention de pièces ou outils supplémentaires.

A cet effet, l'invention concerne un corps creux du type précité, caractérisé en ce que l'axe géométrique de la portée de raccordement est parallèle et décalé par rapport à l'axe géométrique de l'ouverture de communication.

Cette caractéristique présente l'avantage d'une réalisation simple du corps creux, avec des formes géométriques simples (sections circulaires), aucun usinage sophistiqué et ne nécessitant pas l'utilisation de machines-outils complexes.

L'invention concerne également un robinet à obturateur sphérique comprenant un corps principal comportant deux corps creux tels que définis, destinés à être associés rigidement et de façon étanche l'un à l'autre, avec leur canal et ouverture de communication respectifs en regard, de manière à former un logement principal, de forme générale sphérique et délimité de part et d'autre par le siège de chaque corps creux ; le logement principal comportant une ouverture dite supérieure, dont l'axe est sensiblement perpendiculaire à la direction principale, et débouchant sur un manchon ; le robinet comprenant un organe d'obturation comportant une boule, adaptée à tourner autour d'un axe de rotation et percée sensiblement en son centre d'un alésage traversant, s'étendant sensiblement perpendiculairement à l'axe de rotation, et une tige rigidement solidaire de la boule, par une extrémité, et s'étendant dans le prolongement de l'axe de rotation de la boule ; la boule étant placée dans le logement principal, de forme générale sensiblement complémentaire, en reposant contre les sièges des corps creux, et la tige s'étendant à travers l'ouverture supérieure dans le manchon.

Le robinet de l'invention est tel que l'axe géométrique de la portée de raccordement de chaque corps creux est parallèle et décalé par rapport à l'axe géométrique de l'ouverture de communication correspondante suivant une direction perpendiculaire à la direction principale, du côté opposé à l'ouverture supérieure.

Selon l'invention, la portée de raccordement d'un des corps creux est complémentaire à celle de l'autre corps creux, de sorte que les corps creux forment respectivement un corps femelle et un corps mâle.

Le corps femelle comporte sur sa portée de raccordement l'ouverture supérieure, disposée de sorte que son axe passe sensiblement par le centre du logement principal.

Un autre avantage de l'invention réside dans la possibilité d'employer des tiges de longueurs différentes.

Le diamètre de l'ouverture supérieure, et du manchon, est sensiblement complémentaire à celui de la tige.

Le manchon comprend sur sa surface intérieure une garniture d'étanchéité intégrée, adaptée à épouser la tige de l'organe d'obturation.

Ainsi, le manchon formant presse-étoupe est conçu de sorte que la garniture d'étanchéité soit contenue entièrement dans un seul des deux corps, à savoir le corps femelle. Cette caractéristique permet le respect de l'intégrité de la garniture d'étanchéité en fonctionnement.

Un dispositif d'appui est fixé sur la partie extrême libre du manchon, de manière à compresser la garniture d'étanchéité et à maintenir la tige pendant sa rotation.

Suivant une caractéristique de l'invention, le raccordement des parties des portées de raccordement, qui délimitent les ouvertures de raccordement du côté opposé à l'ouverture supérieure, coïncide avec l'axe de l'ouverture supérieure.

Pour permettre la fixation rigide des deux corps creux, la portée de raccordement de chaque corps creux est prolongée par une bride de fixation de section transversale circulaire, s'étendant dans un plan perpendiculaire à la direction principale, et présentant un diamètre externe supérieur à celui de la portée de raccordement correspondante.

L'intérieur de chaque corps creux, ainsi que l'intérieur et l'extérieur de l'organe d'obturation, sont revêtus d'une matière résistant aux fluides corrosifs.

Suivant un mode de réalisation, la matière de revêtement est une résine thermoplastique fluorée.

Le robinet comporte, en outre, deux anneaux d'étanchéité en matière relativement déformante, destinés à être montés sur la boule au voisinage de l'ouverture correspondante de l'alésage et présentant une forme sensiblement complémentaire, respectivement, à celle de la boule au voisinage de son alésage, et aux surfaces correspondantes d'un siège.

Les sièges sont formés chacun d'une surface annulaire sensiblement plane, définissant l'ouverture de communication correspondante et s'étendant dans un plan sensiblement perpendiculaire à la direction principale, et d'une surface cylindrique, s'étendant à partir de la surface annulaire, et dont l'axe est commun à celui des ouvertures de communication.

L'invention s'applique également à un robinet dont la boule est en outre tronquée suivant un plan sensiblement parallèle à l'axe de la tige et perpendiculaire aux ouvertures de l'alésage.

Enfin, l'invention concerne un procédé de montage du robinet tel qu'il vient d'être décrit.

Selon ce procédé :
- on introduit l'extrémité libre de la tige de l'organe d'obturation dans l'ouverture supérieure du corps femelle, en position inclinée par rapport à son axe ;
- on tourne l'organe d'obturation de manière que l'une des ouvertures de l'alésage de la boule soit en regard de la partie de la portée de raccordement, opposée à l'ouverture supérieure ;
- on pousse l'organe d'obturation jusqu'à ce que la boule vienne en butée contre ladite partie de portée de raccordement ;
- on tourne l'organe d'obturation tout en continuant de le pousser jusqu'à ce que l'axe de l'alésage tende à être sensiblement parallèle à la direction principale et que la tige s'étende à l'intérieur du manchon, sensiblement perpendiculairement à la direction principale ;
- on positionne le corps mâle en regard du corps femelle, avec leur logement et leur bride de fixation respectifs en regard ;
- on encastre le corps mâle dans le corps femelle, de sorte que leur portée de raccordement respectives soient en butée ; et
- on fixe rigidement les brides de fixation l'une à l'autre, au moyen d'organes de fixation.

D'autres caractéristiques de l'invention seront décrites en référence aux dessins annexés à titre d'exemples non limitatifs.

La figure 1 représente une vue en coupe transversale, suivant son plan de symétrie, d'un robinet à obturateur sphérique monté selon l'invention.

La figure 2 représente une vue en coupe transversale, suivant son plan de symétrie, d'un corps creux mâle du robinet de la figure 1.

La figure 3 représente une vue de dessus du corps creux mâle.

La figure 4 représente une vue de côté du corps creux mâle.

La figure 5 représente une vue en coupe transversale, suivant son plan de symétrie, du corps creux femelle du robinet de la figure 1.

La figure 6 représente une vue de dessus du corps creux femelle.

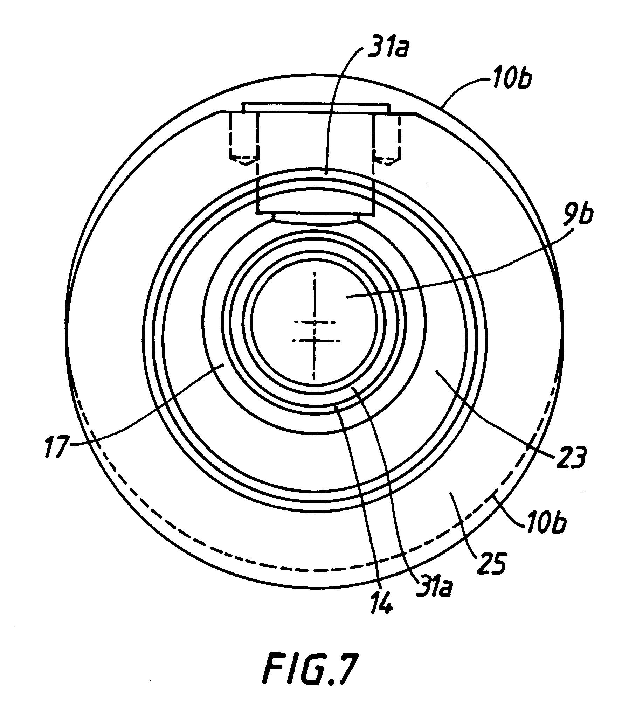

Enfin, la figure 7 représente une vue de côté du corps creux femelle.

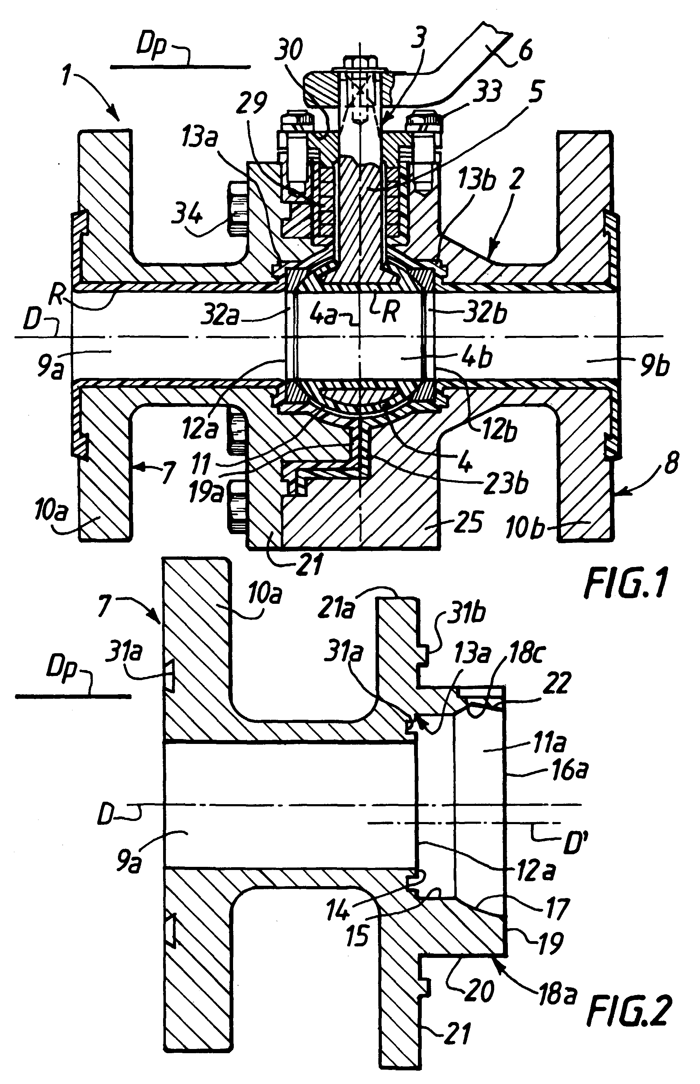

En référence à la figure 1, le robinet 1 comporte un corps principal creux 2 dans lequel est positionné un organe d'obturation 3.

Le corps principal 2 et l'organe d'obturation 3 sont par exemple réalisés en acier.

L'organe d'obturation 3 comporte une boule 4 et une tige 5, reliée rigidement à la boule 4 par une extrémité.

La boule 4 est adaptée à tourner autour d'un axe de rotation 4a et est percée sensiblement en son centre d'un alésage traversant 4b, de section sensiblement circulaire et s'étendant perpendiculairement à l'axe de rotation 4a.

On peut également prévoir que la boule 4 soit en outre tronquée suivant un plan sensiblement parallèle à l'axe de rotation 4a et perpendiculaire aux ouvertures de l'alésage 4b.

La tige 5 s'étend dans le prolongement de l'axe de rotation 4a de la boule 4.

La boule 4 et la tige 5 sont réalisées d'un seul tenant dans le mode de réalisation représenté.

On peut en outre prévoir de réaliser séparément la boule 4 et la tige 5 et de les pré-assembler de manière rigide, de manière à former un organe d'obturation 3 monobloc.

Un manchon d'actionnement 6 est fixé rigidement à l'extrémité libre de la tige 5, de manière à permettre la rotation de l'organe d'obturation 3.

Le corps principal 2 comprend deux corps creux, respectivement mâle 7 et femelle 8, associés l'un à l'autre de manière rigide et étanche.

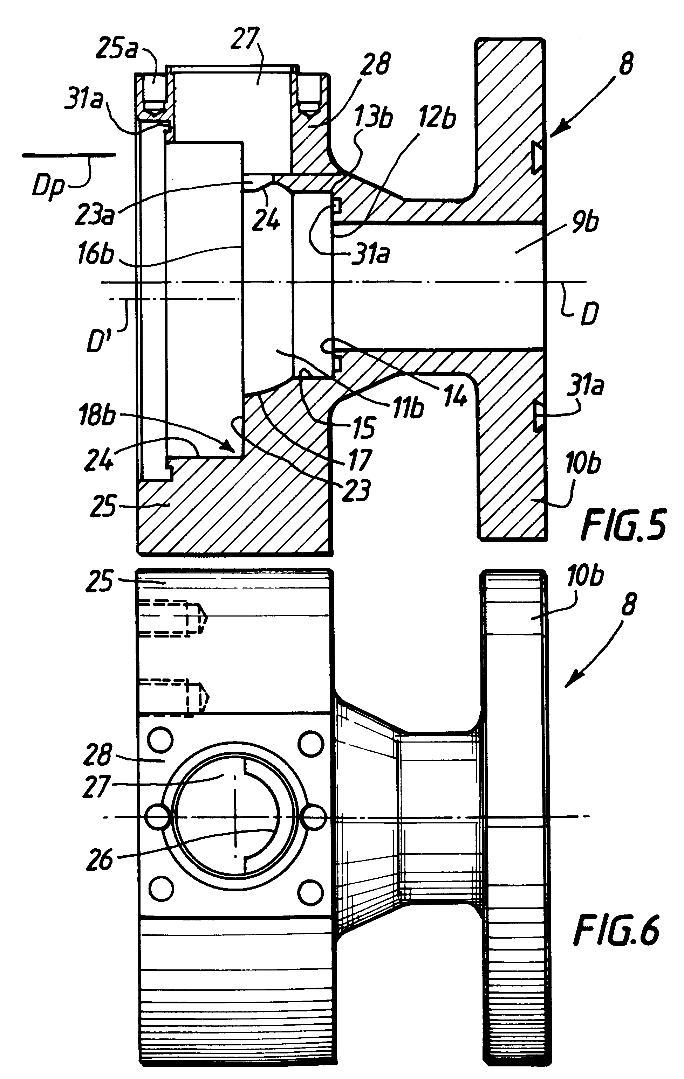

Comme représenté notamment aux figures 2 et 5, chaque corps creux 7, 8 comporte intérieurement un canal, respectivement 9a, 9b, permettant la jonction à une conduite (non représentée), s'étendant sensiblement suivant une direction principale Dₚ.

Les canaux 9a, 9b présentent une section transversale circulaire de diamètre sensiblement identique à celui de l'alésage 4b de la boule 4.

Une bride de fixation à une conduite 10a, 10b entoure la partie extrême libre de chaque canal, respectivement 9a, 9b, et permet l'association rigide et amovible du corps creux correspondant 7, 8 à une conduite.

Chaque corps creux 7, 8 comporte en outre, du côté opposé à la bride de fixation à une conduite 10a, 10b, un logement 11a, 11b, de forme générale hémisphérique.

Le logement 11a, 11b communique avec le canal respectif 9a, 9b par une ouverture de communication 12a, 12b, centrée sur le même axe D que le canal correspondant 9a, 9b.

Chaque ouverture de communication 12a, 12b est délimitée par un siège 13a, 13b.

Les sièges 13a, 13b sont formés chacun d'une surface annulaire 14 sensiblement plane, et d'une surface cylindrique 15.

La surface annulaire 14 définit l'ouverture de communication correspondante 12a, 12b. Elle s'étend dans un plan sensiblement perpendiculaire à la direction principale Dₚ.

La surface cylindrique 15 s'étend à partir de la surface annulaire 14, du côté opposé à l'ouverture de communication 12a, 12b, et son axe est commun à celui D de l'ouverture de communication correspondante 12a, 12b.

Le logement 11a, 11b de chaque corps 7, 8 comporte également une ouverture de raccordement 16a, 16b, située en regard de l'ouverture de communication 12a, 12b suivant la direction principale Dₚ.

L'ouverture de raccordement 16a, 16b présente un contour sensiblement circulaire de diamètre supérieur à celui de l'ouverture de communication 12a, 12b.

L'ouverture de raccordement 16a, 16b est délimitée d'une part par une portion hémisphérique 17 attenante à la surface cylindrique 15, et d'autre part par une portée de raccordement 18a, 18b.

L'axe géométrique D' de la portée de raccordement 18a, 18b de chaque corps creux 7, 8 est parallèle et décalé par rapport à l'axe géométrique D de l'ouverture de communication correspondante 12a, 12b.

La portée de raccordement 18b du corps femelle 8 est complémentaire à celle 18a du corps mâle 7.

De cette manière, l'assemblage du corps principal 2 est réalisé par l'encastrement du corps mâle 7 dans le corps femelle 8, au niveau de leur portée de raccordement respective 18a, 18b.

Cet assemblage est tel que les canaux 9a et 9b s'étendent suivant la même direction Dₚ, avec les brides 10a, 10b situées vers l'extérieur du corps principal 2 et les ouvertures de raccordement 16a et 16b en regard et adjacentes.

Un logement principal 11, de forme générale sphérique, est alors formé par les logements 11a et 11b, et délimité de part et d'autre par les sièges 13a et 13b de chaque corps creux 7, 8.

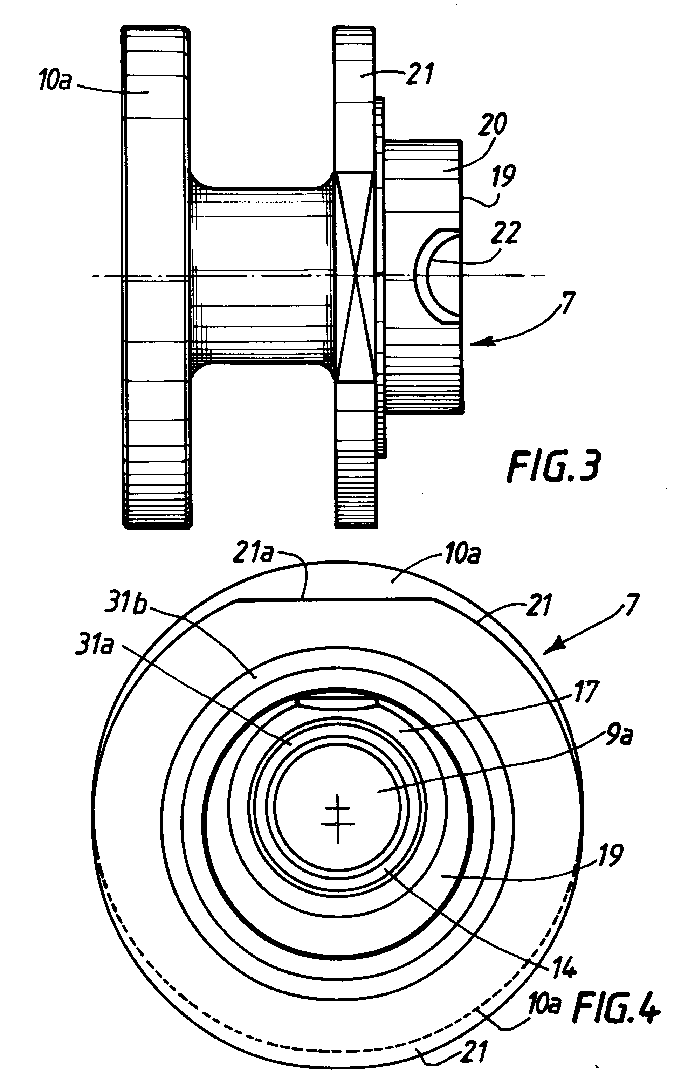

Comme cela est visible aux figures 2 et 3, la portée de raccordement 18a du corps creux mâle 7 comporte une surface annulaire de raccordement 19 définissant l'ouverture de raccordement 16a, et une surface cylindrique de raccordement 20, s'étendant à partir de la surface annulaire de raccordement 19, vers la bride de fixation à une conduite 10a.

La surface annulaire de raccordement 19 s'étend dans un plan sensiblement perpendiculaire à la direction principale Dₚ.

La surface cylindrique de raccordement 20, d'axe D' commun à celui de la surface annulaire de raccordement 19, entoure la portion de sphère 17 et la surface cylindrique 15 du siège 13a.

La surface cylindrique de raccordement 20 est prolongée, du côté opposé à la surface annulaire de raccordement 19, par une bride de fixation 21, de section transversale circulaire et s'étendant dans un plan perpendiculaire à la direction principale Dₚ.

Cette bride de fixation 21 entoure la partie extrême du canal 9a du côté opposé à la bride de fixation à une conduite 10a.

La bride de fixation 21 présente un diamètre externe sensiblement égal à celui de la bride de fixation à une conduite 10a.

En outre, le centre du diamètre externe de la bride de fixation 21 passe par l'axe D'.

Une partie 18c de la portée de raccordement 18a et de la portion hémisphérique 17 du corps mâle 7 est percée radialement d'un alésage de manière à former une ouverture de section semi-circulaire 22. L'axe de cet alésage passe par la surface annulaire de raccordement 19 et par le plan de symétrie du corps creux mâle 7 et est perpendiculaire à la direction principale Dₚ.

Cette partie tronquée 18c est située de sorte que l'axe D' soit décalé par rapport à l'axe D du côté opposé à ladite partie 18c.

En référence à la figure 5, la portée de raccordement 18b du corps femelle est formée également d'une surface annulaire de raccordement 23 sensiblement plane et d'une surface cylindrique de raccordement 24, s'étendant à partir de la surface annulaire de raccordement 23, du côté opposé à la bride de fixation à une conduite 10b.

La surface annulaire de raccordement 23 définit l'ouverture de raccordement 16b et s'étend dans un plan sensiblement perpendiculaire à la direction principale Dₚ.

La surface cylindrique de raccordement 24 a son axe D' commun à celui de la surface annulaire de raccordement 23, décalé par rapport à l'axe D de l'ouverture de communication 12b.

La surface cylindrique de raccordement 24 est en outre prolongée par une bride de fixation 25 de section transversale circulaire, s'étendant dans un plan perpendiculaire à la direction principale Dₚ et formant la partie extrême libre du corps creux femelle 8 du côté opposé à la bride de fixation à une conduite 10b.

Les brides de fixation 21 et 25 présentent chacune un méplat 21a, 25a dans un plan orthogonal et centré par rapport au plan de symétrie du corps creux mâle 7, respectivement femelle 8.

La jonction de la bride de fixation 25 à la surface cylindrique de raccordement 24 forme un décrochement vers l'extérieur de l'espace qu'elles définissent entre elles.

De même que pour le corps mâle 7, la bride de fixation 25 présente un diamètre externe sensiblement égal à celui de la bride de fixation à une conduite 10b et le centre du diamètre externe de la bride de fixation 25 passe par l'axe D'.

Une partie 23a de la portion hémisphérique 17 et de la surface annulaire de raccordement 23 est percée radialement d'un alésage de manière à former une ouverture de section semi-circulaire 26. L'axe de cet alésage passe par la surface annulaire de raccordement 23 et le plan de symétrie du corps creux femelle 8 et est perpendiculaire à la direction principale Dₚ. Cette ouverture semi-circulaire 26 est de même diamètre que celle 22 du corps mâle 7.

L'axe D' est décalé par rapport à l'axe D du côté opposé à cette ouverture semi-circulaire 26.

Lorsque le corps principal 2 est monté, les ouvertures semi-circulaires 22 et 26 sont en regard et l'ouverture circulaire formée par elles est adaptée à épouser la forme de la tige 5.

L'ouverture semi-circulaire 26 est surmontée d'une ouverture supérieure 27 de section sensiblement circulaire, débouchant sur un manchon 28 de même section, délimité par la bride de fixation 25 et formé dans la matière du corps femelle 8 délimitant la surface cylindrique de raccordement 24 et la portion de sphère 17.

L'ouverture supérieure 27 et le manchon 28 ont le même axe que l'ouverture semi-circulaire 26 mais présentent un diamètre supérieur, sensiblement complémentaire à celui de la tige 5 (voir figure 6).

Le manchon 28 comprend sur sa surface intérieure une garniture d'étanchéité intégrée 29, adaptée à épouser la tige 5.

Un dispositif d'appui 30, de forme générale cylindrique, est destiné à être fixé sur la partie extrême libre du manchon 28, au moyen d'organes de fixation 33 pénétrant dans des orifices 25a de la bride de fixation 25.

Le dispositif d'appui 30 repose sur les méplats 21a et 25a des brides de fixation 21 et 25.

Ce dispositif d'appui 30 est adapté à compresser la garniture d'étanchéité 29 et à maintenir la tige 5 pendant sa rotation.

L'intérieur de chaque corps creux 7, 8 -c'est-à-dire les surfaces délimitant les canaux 9a, 9b, les sièges 13a, 13b et les portées de raccordement 18a, 18b- est revêtu d'une matière résistant aux fluides corrosifs.

Cette matière est fixée dans des rainures et nervures 31a, 31b ménagées dans les surfaces internes des corps creux 7, 8.

De même, toutes les parties de l'organe d'obturation 3 qui sont en contact avec le fluide véhiculé -notamment la surface délimitant l'alésage 4b et la surface extérieure de la boule 4, et éventuellement de la tige 5-sont revêtues par une telle matière.

Cette matière est par exemple une résine thermoplastique fluorée, telle que du FEP (fluoro-éthylène propylène), PFA (perfluoralkoxy), ou PVDF (polyfluorure de vinylidène), représentée par la référence R sur les figures.

La boule 4 de l'organe d'obturation 3 est destinée à être placée dans le logement principal 11 en reposant contre les sièges 13a, 13b, par l'intermédiaire de deux anneaux d'étanchéité 32a, 32b.

Ces anneaux d'étanchéité 32a, 32b sont réalisés en une matière relativement déformable et présentent un faible coefficient de frottement, telle qu'une matière plastique en résine thermofluorée.

Ils doivent en outre présenter de bonnes qualités d'étanchéité et une grande résistance aux agents chimiques.

Les anneaux 32a, 32b présentent une forme sensiblement complémentaire d'une part, à la boule 4 au voisinage de son alésage 4b, et d'autre part aux surfaces correspondantes 14, 15 d'un siège 13a, 13b.

La dimension des logements 11a, 11b des corps mâle et femelle 7, 8 est telle que le logement principal 11 soit sensiblement complémentaire à la boule 4 portant les anneaux d'étanchéité 32a, 32b.

Cette caractéristique permet de diminuer au maximum les zones de rétention.

Nous allons maintenant décrire le procédé de montage du robinet 1.

Avant l'introduction de l'organe d'obturation 3, on positionne un anneau d'étanchéité 32b sur le siège 13b du corps femelle 8.

Pour placer l'organe d'obturation 3 à l'intérieur du corps femelle 8, on introduit l'extrémité libre de la tige 5 dans l'ouverture supérieure 27, en position inclinée par rapport à l'axe de ladite ouverture.

Puis, on tourne l'organe d'obturation 3 de manière que l'une des ouvertures de l'alésage 4b de la boule 4 soit en regard de la partie 18c de la portée de raccordement 18b, opposée à l'ouverture supérieure 27.

On pousse ensuite l'organe d'obturation 3 jusqu'à ce que la boule 4 vienne en butée contre la partie 18c.

La tige 5 étant en butée contre une des parois du manchon 28, on tourne l'organe d'obturation 3 tout en continuant de le pousser, jusqu'à ce que l'axe de l'alésage 4b tende à être sensiblement parallèle à la direction principale Dₚ et que la tige 5 s'étende à l'intérieur du manchon 28, sensiblement perpendiculairement à la direction principale Dₚ.

On positionne ensuite l'autre anneau d'étanchéité 32a au voisinage de l'alésage 4b de la boule 4, autour de son ouverture dirigée vers l'extérieur du corps femelle 8.

On peut alors positionner le corps mâle 7 en regard du corps femelle 8, avec leur logement 11a, 11b et leur bride de fixation 21, 25 respectif en regard.

Puis, on encastre le corps mâle 7 dans le corps femelle 8, de sorte que leur portée de raccordement 18a, 18b respective soit en butée, et que le siège 13a du corps mâle 7 vienne contre l'anneau d'étanchéité 32a.

Enfin, on fixe rigidement les brides de fixation 21 et 25 l'une à l'autre, au moyen d'organes de fixation 34, montés dans des orifices des brides de fixation 21, 25.

On peut alors monter le dispositif d'appui 30 et le manchon d'actionnement 6.

Lorsque le robinet 1 est monté, le raccordement des parties 19a, 23b des surfaces annulaires de raccordement 19, 23, qui délimitent les ouvertures de raccordement 16a, 16b du côté opposé à l'ouverture supérieure 27, coïncide avec l'axe de l'ouverture supérieure 27.

Le robinet 1 étant monté, l'organe d'obturation 3 peut être tourné suivant deux positions :
- une position ouverte, dans laquelle l'axe de l'alésage 4b correspond à l'axe D, un fluide pouvant alors circuler entre les deux canaux 9a, 9b via l'alésage 4b, et
- une position fermée, où l'organe d'obturation 3 a été tourné d'un angle d'environ 90° par rapport à la position ouverte, et dans laquelle aucun fluide ne peut circuler, les parties pleines de la boule 4 obturant les ouvertures de communication 12a, 12b.

Il est à noter que dans les deux positions, les anneaux d'étanchéité 32a, 32b constituent un joint d'étanchéité entre la boule 4 et la surface intérieure du logement principal 11.

Dans la variante, non représentée, où la boule 4 est tronquée, comme précédemment décrit, et en position fermée, l'une seulement des ouvertures de communication 12a, 12b est obturée.

Ceci permet un nettoyage parfait de l'intérieur du corps principal 2 et évite toute contamination des parties internes du robinet 1.

## Revendications

1. Corps creux (7, 8) destiné à être associé à un autre corps (8, 7) pour former un corps principal (2) notamment d'un robinet à obturateur sphérique, comportant :
- un canal (9a, 9b) de section transversale sensiblement circulaire, s'étendant suivant une direction principale Dₚ ; et
- un logement (11a, 11b), de forme générale hémisphérique, ayant :
. une ouverture de communication (12a, 12b) avec le canal, délimitée par un siège (13a, 13b), l'ouverture de communication (12a, 12b) et le canal (9a, 9b) étant centrés sur un même axe (D) ; et
. une ouverture de raccordement (16a, 16b) à l'autre corps, délimitée par une portée de raccordement (18a, 18b) et située en regard de l'ouverture de communication (12a, 12b) suivant la direction principale (Dₚ), l'ouverture de raccordement (16a, 16b) présentant un contour sensiblement circulaire de diamètre supérieur à celui de l'ouverture de communication (12a, 12b) ;
caractérisé en ce que l'axe géométrique (D') de la portée de raccordement (18a, 18b) est parallèle et décalé par rapport à l'axe géométrique (D) de l'ouverture de communication (12a, 12b).

2. Robinet à obturateur sphérique comprenant un corps principal (2) comportant deux corps creux (7, 8) selon la revendication 1, destinés à être associés rigidement et de façon étanche l'un à l'autre, avec leur canal (9a, 9b) et ouverture du communication (12a, 12b) respectifs en regard, de manière à former un logement principal (11), de forme générale sphérique et délimité de part et d'autre par le siège (13a, 13b) de chaque corps creux (7, 8) ; le logement (11) principal comportant une ouverture dite supérieure (27), dont l'axe est sensiblement perpendiculaire à la direction principale (Dₚ), et débouchant sur un manchon (28) ; le robinet comprenant un organe d'obturation (3) comportant une boule (4), adaptée à tourner autour d'un axe de rotation (4a) et percée sensiblement en son centre d'un alésage traversant (4b), s'étendant sensiblement perpendiculairement à l'axe de rotation (4a), et une tige (5) rigidement solidaire de la boule (4), par une extrémité, et s'étendant dans le prolongement de l'axe de rotation (4a) de la boule ; la boule (4) étant placée dans le logement principal (11), de forme générale sensiblement complémentaire, en reposant contre les sièges (13a, 13b) des corps creux (7, 8), et la tige (5) s'étendant à travers l'ouverture supérieure (27) dans le manchon (28).

3. Robinet selon la revendication 2, caractérisé en ce que l'axe géométrique (D') de la portée de raccordement (18a, 18b) de chaque corps creux (7, 8) est parallèle et décalé par rapport à l'axe géométrique (D) de l'ouverture du communication correspondante (12a, 12b) suivant une direction perpendiculaire à la direction principale (Dₚ), du côté opposé à l'ouverture supérieure (27).

4. Robinet selon la revendication 2 ou 3, caractérisé en ce que la portée de raccordement (18b) d'un des corps creux (8) est complémentaire à celle (18a) de l'autre corps creux (7), de sorte que les corps creux forment respectivement un corps femelle (8) et un corps mâle (7).

5. Robinet selon la revendication 4, caractérisé en ce que le corps femelle (8) comporte sur sa portée de raccordement (18b) l'ouverture supérieure (27), disposée de sorte que son axe passe sensiblement par le centre du logement principal (11).

6. Robinet selon l'une des revendications 2 à 5, caractérisé en ce que le diamètre de l'ouverture supérieure (27), et du manchon (28), est sensiblement complémentaire à celui de la tige (5).

7. Robinet selon l'une des revendications 2 à 6, caractérisé en ce que le manchon (28) comprend sur sa surface intérieure une garniture d'étanchéité intégrée (29), adaptée à épouser la tige (5) de l'organe d'obturation (3).

8. Robinet selon la revendication 7, caractérisé en ce qu'un dispositif d'appui (30) est fixé sur la partie extrême libre du manchon (28), de manière à compresser la garniture d'étanchéité (29) et à maintenir la tige (5) pendant sa rotation.

9. Robinet selon l'une des revendications 2 à 8, caractérisé en ce que le raccordement des parties (19a, 23b) des portées de raccordement (18a, 18b), qui délimitent les ouvertures de raccordement (16a, 16b) du côté opposé à l'ouverture supérieure (27) , coïncide avec l'axe de l'ouverture supérieure (27).

10. Robinet selon l'une des revendications 2 à 9, caractérisé en ce que la portée de raccordement (18a, 18b) de chaque corps creux est prolongée par une bride de fixation (21, 25) de section transversale circulaire, s'étendant dans un plan perpendiculaire à la direction principale (Dₚ), et présentant un diamètre externe supérieur à celui de la portée de raccordement (18a, 18b) correspondante.

11. Robinet selon l'une des revendications 2 à 10, caractérisé en ce que l'intérieur de chaque corps creux (7, 8), ainsi que l'intérieur et l'extérieur de l'organe d'obturation (3), sont revêtus d'une matière résistant aux fluides corrosifs.

12. Robinet selon la revendication 11, caractérisé en ce que la matière de revêtement est une résine thermoplastique fluorée.

13. Robinet selon l'une des revendications 2 à 12, caractérisé en ce qu'il comporte deux anneaux d'étanchéité (32a, 32b) en matière relativement déformante, destinés à être montés sur la boule (4) au voisinage de l'ouverture correspondante de l'alésage (4b) et présentant une forme sensiblement complémentaire, respectivement, à celle de la boule (4) au voisinage de son alésage (4b), et aux surfaces correspondantes (14, 15) d'un siège (13a, 13b).

14. Robinet selon l'une des revendications 2 à 13, caractérisé en ce que les sièges (13a, 13b) sont formés chacun d'une surface annulaire (14) sensiblement plane, définissant l'ouverture du communication correspondante (12a, 12b) et s'étendant dans un plan sensiblement perpendiculaire à la direction principale (Dₚ), et d'une surface cylindrique (15), s'étendant à partir de la surface annulaire (14), et dont l'axe est commun à celui des ouvertures de communication (12a, 12b).

15. Robinet selon l'une des revendications 2 à 14, caractérisé en ce que la boule (4) est en outre tronquée suivant un plan sensiblement parallèle à l'axe de la tige (5) et perpendiculaire aux ouvertures de l'alésage (4b).

16. Procédé de montage d'un robinet conforme à l'une des revendications 2 à 15, caractérisé par les étapes successives suivantes :
- on introduit l'extrémité libre de la tige (5) de l'organe d'obturation (3) dans l'ouverture supérieure (27) du corps femelle (8), en position inclinée par rapport à son axe ;
- on tourne l'organe d'obturation (3) de manière que l'une des ouvertures de l'alésage (4b) de la boule (4) soit en regard de la partie (23b) de la portée de raccordement (18b), opposée à l'ouverture supérieure (27) ;
- on pousse l'organe d'obturation (3) jusqu'à ce que la boule (4) vienne en butée contre ladite partie (23b) de portée de raccordement ;
- on tourne l'organe d'obturation (3) tout en continuant de le pousser jusqu'à ce que l'axe de l'alésage (4b) tende à être sensiblement parallèle à la direction principale (Dₚ) et que la tige (5) s'étende à l'intérieur du manchon (28), sensiblement perpendiculairement à la direction principale (Dₚ) ;
- on positionne le corps mâle (7) en regard du corps femelle (8), avec leur logement (11a, 11b) et leur bride de fixation (21, 25) respectifs en regard ;
- on encastre le corps mâle (7) dans le corps femelle (8), de sorte que leur portée de raccordement (18a, 18b) respectives soient en butée ; et
- on fixe rigidement les brides de fixation (21, 25) l'une à l'autre, au moyen d'organes de fixation.
